# EUROPEAN PATENT SPECIFICATION

(11) **EP 2 042 895 B1**
(45) Date of publication and mention of the grant of the patent: **19.04.2017**
(21) Application number: 07790793.9
(22) Date of filing: 13.07.2007
(51) Int. Cl.: G02B 5/30, B05C 9/12, B05C 9/14, B05D 3/06, G02F 1/1335

(54) **METHOD FOR PRODUCING CIRCULARLY POLARIZED LIGHT ISOLATION SHEET, AND APPARATUS FOR COATING FILM FORMATION**
VERFAHREN ZUM HERSTELLEN EINES ISOLATIONSBLATTS FÜR ZIRKULARPOLARISIERTES LICHT UND VORRICHTUNG ZUR BESCHICHTUNGSFILMBILDUNG
PROCÉDÉ DE FABRICATION D'UNE FEUILLE D'ISOLATION À LA LUMIÈRE POLARISÉE CIRCULAIREMENT, ET APPAREIL DE FORMATION DU FILM DE REVÊTEMENT

(30) Priority: 13.07.2006 JP 2006192804
(43) Date of publication of application: 01.04.2009
(73) Proprietor: Zeon Corporation, Tokyo 100-8246 (JP)
(72) Inventor: KANNO, Hiroshi, Tokyo 100-8246 (JP); HANEDA, Tsutomu, Tokyo 100-8246 (JP); TAKAI, Hirokazu, Tokyo 100-8246 (JP); IGARASHI, Hiroo, Tokyo 100-8246 (JP); SAITO, Masakazu, Tokyo 100-8246 (JP)
(74) Representative: Adam, Holger
(86) International application number: PCT/JP2007/064013
(87) International publication number: WO 2008/007782

(56) References cited:
- WO-A1-2004/088366
- JP-A- 2002 277 637
- JP-A- 2003 055 661
- JP-A- 2003 106 767
- JP-A- 2003 177 243
- JP-A- 2005 062 765
- JP-A- 2005 084 271
- JP-A- 2005 224 754
- JP-A- 2006 003 883
- JP-A- 2006 003 883
- US-A1- 2002 057 400
- US-A1- 2004 157 004
- Patrick Oswald: "Editor: Vlad Popa-Nita 3 Phase transitions and unwinding of cholesteric liquid crystals", Research Signpost, 1 January 2006 (2006-01-01), XP055126765, Retrieved from the Internet: URL:http://www.trnres.com/ebook/uploads/po panitacontents/T_1231320192Popa-Nita 3.pdf [retrieved on 2014-07-03]
- Anonymous: "Phases of Liquid Crystals", , 1 July 2014 (2014-07-01), XP055126771, Retrieved from the Internet: URL:http://plc.cwru.edu/tutorial/enhanced/ files/lc/phase/phase.htm [retrieved on 2014-07-03]
- Claudiu M. Cirloganu ET AL: "Enhanced carrier multiplication in engineered quasi-type-II quantum dots", Nature Communications, vol. 5, 18 June 2014 (2014-06-18), XP055126865, DOI: 10.1038/ncomms5148

## Description

### TECHNICAL FIELD

The present invention relates to a method for producing a circular polarization separation sheet and an apparatus for coating layer formation, and in particular relates to a method for producing a circular polarization separation sheet used for a variety of optical films and an apparatus for coating layer formation used for the production thereof.

### BACKGROUND ART

As screens of liquid crystal display apparatuses become larger in recent years, there are increasing demands for a higher luminance and a wider view angle thereof. In order to enhance display property of the liquid crystal display apparatus, the liquid crystal display apparatus is equipped with a variety of films. As such films, a variety of films have hitherto been produced. Among them, a brightness enhancement film for increasing the luminance upon displaying is a particularly important factor for reducing an electric power consumption of the liquid crystal display apparatus. Thus there are high demands for its quality and cost.

As a constituent of the brightness enhancement film, there is known a constituent thereof having a polarization separation layer for separating an incident light into a light to be transmitted and a light to be reflected depending on its polarization state. As an element for this polarization separation layer, for example, there is known a circular polarization separation sheet having a cholesteric liquid crystal polymerization layer (e.g., JP Hei-6-235900-A [corresponding application: US patent No. 6,307,604], JP hei-8-271731). Such a circular polarization separation sheet is conventionally produced mainly by using an apparatus for coating layer formation. In such a production, a polymerizable composition from a coating head of the apparatus is applied onto a substrate surface, then the coating layer is heated by a dryer, and then the dried coating layer is irradiated once with a curing ultraviolet light, for curing the layer. When the circular polarization separation sheet is produced in accordance with this method, its wavelength bandwidth of selective reflection in a visible range is about several tens of nanometers. Thus, it has been difficult to use this sheet as it is for a member of a brightness enhancement film which has to cover the entire visible light range. In addition, in order to realize the selective reflection throughout the entire visible light range, it is necessary to laminate 8 to 10 layers of the coating layers. Thus, an undesirable large number of steps are required. Another relevant prior art is JP2006003883 A and US2004/157004 A1. The present applicant has proposed a method wherein a photopolymerizable cholesteric liquid crystal compound is applied onto the substrate, then the resulting coating layer is irradiated with a low irradiation amount of a particular active light for photopolymerization, then the pitch of the photopolymerized cholesteric liquid crystal layer is altered, and then irradiation with a high irradiation amount of a particular active light is performed for further photopolymerization of the cholesteric liquid crystal layer (see e.g., JP 2006-3883). However, as to this product, the wavelength bandwidth of the selective reflection in the visible range is one hundred and several tens of nanometers. In order to realize the selective reflection throughout the entire visible light range, it is necessary to laminate 3 or more of the cholesteric layers. Thus, it has been desired to develop a method and an apparatus by which a circular polarization separation sheet which realizes the selective reflection in the entire visible light range can be obtained more easily.

### DISCLOSURE OF INVENTION

### PROBLEM TO BE SOLVED BY THE INVENTION

The present invention has been made in the light of the aforementioned conventional circumstance, and the object thereof is to provide a method for producing a circular polarization separation sheet through which a circular polarization separation sheet enabling selective reflection of a light in an entire visible light range can be obtained easily, as well as an apparatus for coating layer formation capable of being suitably used for the method.

### MEANS FOR SOLVING PROBLEM

In order to accomplish the aforementioned object, the method for producing the circular polarization separation sheet according to the present invention is a method for producing a circular polarization separation sheet comprising a coating layer forming step of applying on a substrate a photopolymerizable composition containing a photopolymerization initiator and a polymerizable liquid crystal compound, to obtain a coating layer; and a resin layer forming step of converting said coating layer into a resin layer having a cholesteric regularity, wherein said resin layer forming step includes: a selected ultraviolet light irradiation step (1) of irradiating said coating layer with a selected ultraviolet light having an illumination intensity of 0.1 mW/cm² or more and less than 10 mW/cm² under a temperature at 20 to 40°C for 0.1 to 6 seconds; a cholesteric regularity adjustment step (2) of changing a cycle of the cholesteric regularity in said coating layer; and a coating layer curing step (3) of curing said coating layer, and wherein said selected ultraviolet light irradiation step (1) and said cholesteric regularity adjustment step (2) are repeated more than once in said resin layer forming step.

The selected ultraviolet light herein means an ultraviolet light whose wavelength range and/or illumination intensity are selectively limited so as to enable liquid crystal polymerization of a polymerizable liquid crystal compound which composes a photopolymerizable composition, with a variety in crosslinking degrees along a thickness direction. Irradiation with this selected ultraviolet light (also referred to as the ultraviolet light for widening bandwidth) may cause variation in crosslinking degree of the liquid crystal along the thickness direction of the coating layer of the photopolymerizable composition, which enables widening of the bandwidth. Irradiation with this selected ultraviolet light does not cause complete curing (100% polymerization) of the coating layer.

The apparatus for the coating layer formation according to the present invention is an apparatus for coating layer formation capable of being used for the method for producing the circular polarization separation sheet according to claim 1, comprising: a feeding device for continuously sending out said substrate; and a coating head for applying said photopolymerizable composition onto the substrate sent out from said feeding device to form said coating layer; wherein said apparatus also comprises two or more series of: a unit for cooling the substrate on which said coating layer has been formed; a selected ultraviolet light irradiation device for irradiating said coating layer with a selected ultraviolet light whose wavelength range and/or illumination intensity has been selected; and a unit for heating the substrate on which the coating layer has been formed.

### EFFECT OF THE INVENTION

According to the method for producing the circular polarization separation sheet or/and the apparatus for the coating layer formation according to the present invention, a coating layer of the photopolymerizable composition formed on a substrate may be irradiated with a selected ultraviolet light whose wavelength and illumination intensity are selected and then heated, and subsequently this coating layer may be cured to form a resin layer having a cholesteric regularity on the substrate, whereby it becomes possible to easily make the circular polarization separation sheet wherein one or two of the aforementioned resin layers can cause reflection in the entire visible light range.

### BRIEF DESCRIPTION OF DRAWINGS

FIG. 1 is a schematic constitutive view showing one example of an apparatus for coating layer formation according to the present invention.
FIG. 2 is a schematic constitutive view showing another example of an apparatus for coating layer formation according to the present invention.

### BEST MODE FOR CARRYING OUT THE INVENTION

The method of the present invention is a method for producing a circular polarization separation sheet as defined by claim 1.

In the present invention, the photopolymerizable composition containing the photopolymerizable initiator and the polymerizable liquid crystal compound is applied onto the substrate to obtain the coating layer (hereinafter, sometimes abbreviated as a "coating layer formation step").

The substrate used in the present invention is not necessary to be particularly limited as long as it is an optically transparent substrate, although the substrate is preferably a lengthy, film-shaped sheet in order to efficiently produce the circular polarization separation sheet. In order to avoid an unnecessary change of a polarization state, it is preferable that the substrate is an optically isotopic film having a small birefringencial phase shift. The thickness is preferably 5 to 300 µm and more preferably 30 to 200 µm in terms of reduced material cost, thickness and weight. Such a transparent substrate is not particularly limited as long as its total light transmittance at a thickness of 1 mm is 80% or more, and examples thereof may include monolayered or laminated films composed of synthetic resins such as aliphatic olefin polymers, chained olefin polymers such as polyethylene and polypropylene, triacetylcellulose, polyvinyl alcohol, polyimide, polyarylate, polyester, polycarbonate, polysulfone, polyether sulfone, modified acrylic polymers and epoxy based resins, and glass plates.

In the present invention, it is preferable that the substrate is provided with an orientation film for orienting the liquid crystal compound. The orientation film may be provided by a rubbing treatment of an organic compound, an oblique evaporation of an inorganic compound, a formation of a microgroup, or an accumulation of an organic compound by Langmuir Blodgett method (LB film). Furthermore, it is possible to use an orientation film on which an orientation function may be generated by application of an electric filed or a magnetic field or by irradiation with light. Moreover, it is preferable to previously give a surface treatment to the substrate in order to impart an adhesiveness between the substrate and the orientation film. As the method therefor, a glow discharge treatment, a corona discharge tretament, an ultraviolet (UV) light treatment and a flame treatment are known. It is also effective to provide an adhesive layer (primer coating layer) on the substrate.

In the present invention, the orientation film is preferably an orientation film formed by the rubbing treatment of the polymer capable of being applied from the respect that a continuous treatment is further made possible. The rubbing tretament is accomplished by rubbing the surface of the polymer layer with a fabric along one direction. Type of the polymers for such an orientation film is not particularly limited, and may be selected depending on the type of the liquid crystal compound and an objective orientation. The orientation film preferably has a polymerizable group for the purpose of imparting the adhesiveness between the liquid crystal compound and the substrate. The thickness of the orientation film is preferably 0.001 to 5 µm and more preferably 0.01 to 2 µm.

The photopolymerizable composition used in the present invention contains a photopolymerization initiator and a polymerizable liquid crystal compound. Examples of the photopolymerization initiator may include aryl ketone based photopolymerization initiators such as acetophenones, benzophenones, alkylaminobenzophenones, benzils, benzoins, benzoin ethers, benzyldimethylacetals, benzoylbenzoates and α-acyloxime esters; sulfur containing photopolymerization initiators such as sulfides and thioxanthones; acylphosphine oxides such as acyldiarylphosphine oxide; and anthraquinones.
As the photopolymerization initiators, one or more species thereof may be appropriately selected and used. The content of the photopolymerization initiator is not particularly limited, and is selected in the range of typically 0.001 to 50 parts by weight, preferably 0.01 to 20 parts by weight and more preferably 0.5 to 5 parts by weight based on 100 parts by weight of a monomer component composed of the polymerizable liquid crystal compound and a chiral agent which will be described later.

The polymerizable liquid crystal compound may be, for example, compounds represented by the following formula (1) :

R³-C³-D³-C⁵-M-C⁶-D⁴-C⁴-R⁴ (1) :

wherein R³ and R⁴ represent reactive groups, and each independently represent a groups selected from the group consisting of an acryl group, a methacryl group, an epoxy group, a thioepoxy group, an oxetane group, a thietanyl group, an aziridinyl group, a pyrrol group, a vinyl group, an allyl group, a fumarate group, a cinnamoyl group, an oxazoline group, a mercapto group, an isocyanate group, an isothiocyanate group, an amino group, a hydroxyl group, a carboxyl group and an alkoxysilyl group; D³ and D⁴ represent a group selected from the group consisting of a single bond, a straight or branched alkyl group having 1 to 20 carbon atoms and a straight or branched alkylene oxide group having 1 to 20 carbon atoms; C³ to C⁶ represent a group selected from the group consisting of a single bond, -O-, -S-, -S-S-, -CO-, -CS-, -OCO-, -CH₂-, -OCH₂-, -CH=N-N=CH-, -NHCO-, -OCOO-, -CH₂COO- and -CH₂OCO-; and M represents a mesogenic group, and may be specifically formed by binding 2 to 4 skeletons selected from the group consisting of azomethines, azoxys, phenyls, biphenyls, terphenyls, naphthalenes, anthracenes, benzoate esters, cyclohexane carboxylate phenyl esters, cyanophenyl cyclohexanes, cyano-substituted phenylpyrimidines, alkoxy-substituted phenylpyrimidines, phenyldioxanes, tolans and alkenylcyclohexylbenzonitriles, which are not substituted or may have a substituent(s), with a binding group such as -O-, -S-, -S-S-, -CO-, -CS-, -OCO-, -CH₂-, -OCH₂-, -CH=N-N=CH-, -NHCO-, -OCOO-, -CH₂COO- and -CH₂OCO-.

Examples of the substituents which the mesogenic group M may have may include a halogen atom, an alkyl group having 1 to 10 carbon atoms which may have a substituent, a cyano group, a nitro group, -O-R⁵, -O-C(=O)-R⁵, -C(=O)-O-R⁵, -O-C(=O)-O-R⁵, -NR⁵-C(=O)-R⁵, -C(=O)-NR⁵ or -O-C(=O)-NR⁵. R⁵ represents a hydrogen atom or an alkyl group having 1 to 10 carbon atoms. When R⁵ represents the alkyl group, -O-, -S-, -O-C(=O)-, -C(=O)-O-, -O-C(=O)-O-, -NR⁶-C(=O)-, -C(=O)-NR⁶-, -NR⁶- or -C(=O)- may lie in the alkyl group (although the cases wherein 2 or more of -O- or -S- lie adjacently are excluded). R⁶ represents a hydrogen atom or an alkyl group having 1 to 6 carbon atoms. Examples of the substituents which the "alkyl group having 1 to 10 carbon atoms which may have a substituent" may have may include a halogen atom, a hydroxyl group, a carboxyl group, a cyano group, an amino group, an alkoxy group having 1 to 6 carbon atoms, an alkoxyalkoxyl group having 2 to 8 carbon atoms, an alkoxyalkoxyalkoxy group having 3 to 15 carbon atoms, an alkoxycarbonyl group having 2 to 7 carbon atoms, an alkylcarbonyloxy group having 2 to 7 carbon atoms and an alkoxycarbonyloxy group having 2 to 7 carbon atoms.

In addition to the photopolymerizable initiator and the polymerizable liquid crystal compound, the photopolymerizable composition for the present invention may further contain other additives. Examples of other additives may include solvents, crosslinking agents, surfactants, chiral agents, polymerization inhibitors for extending a pot life, antioxidants, ultraviolet light absorbers and light stabilizers for enhancing a durability.

Application of the photopolymerizable composition may be performed by publicly known methods such as reverse gravure coating, direct gravure coating, die coating and bar coating.

In the present invention, it is preferable to have a drying step of heating the coating layer after the photopolymerizable composition containing the photopolymerizable initiator and the polymerizable liquid crystal compound is applied on the substrate. The drying temperature is in the range of 40 to 150°C.

In the present invention, the coating layer of the photopolymerizable composition on the substrate (hereinafter referred to as a photopolymerizable coating layer) is converted into a resin layer having a cholesteric regularity (hereinafter sometimes abbreviated as the "resin layer forming step").

First, the photopolymerizable coating layer is irradiated with the selected ultraviolet light at an illumination intensity of 0.1 mW/cm² or more and less than 10 mW/cm² under the temperature at 20 to 40°C for 0.1 to 6 seconds (selected ultraviolet light irradiation). The illumination intensity is measured on the substrate surface using an illuminometer having a peak sensitivity at the wavelength of the selected ultraviolet light (specifically having the peak sensitivity at 360 nm).

In the present invention, the selected ultraviolet light (also referred to as the ultraviolet light for the widening bandwidth) means, as described previously, an ultraviolet light whose wavelength range and illumination intensity are selectively controlled so as to cause variation in the crosslinking degrees of the liquid crystal in the photopolymerizable coating layer along the thickness direction of the film. As previously described, Irradiation with this selected ultraviolet light does not cause complete curing (100% polymerization) of the coating layer.

As the selected ultraviolet light used in the selected ultraviolet light irradiation step in the present invention, it is preferable to use the ultraviolet light having a width of wavelength range within 100 nm. Specifically, an ultraviolet light having a maximum illumination intensity at 300 nm or more and less than 400 nm is preferable. As a light source, for example, a mercury lamp light source and a metal halide lamp light source may be used. This way, the ultraviolet light is used under the condition of the illumination intensity of 0.1 mW/cm² or more and less than 10 mW/cm² and an illumination time for 0.1 to 6 seconds with adjusting the width of the wavelength range within 100 nm using a band pass filter in the selected ultraviolet light irradiation step. It is also possible to use the ultraviolet light without controlling the width of the wavelength range depending on the condition. The width of the wavelength range is the half value of width (width at the half value of the peak value of the transmittance).

The wavelength range is controlled specifically by the method of using the band pass filter having a center wavelength of 365 nm or the method of making the width of the wavelength range within 100 nm including the wavelength at which the polymerization initiator contained in the coating layer exhibits the maximum absorbance. Irradiation with the selected ultraviolet light may be given onto a surface of the coating layer, a surface of the substrate or both the surface of the coating layer and the surface of the substrate, although according to the invention the irradiation is given on the surface of the substrate because polymerization inhibition due to oxygen may be thereby reduced.

When irradiation is given onto the surface of the coating layer, it is necessary to severely control the stability of the illumination intensity and the irradiation time (specifically within ±3%). Thus, it is preferable also in terms of productivity to give irradiation on the substrate.

The present invention includes a step of cooling the photopolymerizable coating layer on the substrate before the selected ultraviolet light irradiation step. If the photopolymerizable coating layer kept at 20 to 40°C is irradiated with the aforementioned selected ultraviolet light, an intensity distribution of the light occurs along the thickness direction of the coating layer. As a result, it is possible to form a cholesteric liquid crystal layer having a variety in crosslinking degrees along the thickness direction of the film. Examples of the method of cooling may include the cooling by supplying cold air or the cooling by a cooling roll.

Subsequently, the cycle of the cholesteric regularity in the coating layer is changed (cholesteric regularity adjustment step).

Changing the cycle of the cholesteric regularity in the coating layer is changing the pitch in the resin layer having the cholesteric regularity along the thickness direction.

Examples of the methods of changing the cycle of the cholesteric regularity may include (I) a process of treating with heat at the temperature equal to or higher than the temperature at which a liquid crystal phase is exhibited, (II) a process of further applying the liquid crystal compound on the coating layer and (III) a process of further applying a non-liquid crystal compound on the coating layer. The process may be one of them, a repeating operation thereof or a combination of two or more of processes. Among them, preferable one is the process (I), treatment with heat at the temperature equal to or higher than the temperature at which the liquid crystal phase is exhibited, in terms of easy operation and effect.

Considering the effect of widening bandwidth as well as the productivity, the condition for treating with heat is typically heating at 50 to 115°C for about 0.001 to 20 minutes, preferably at 65 to 115°C for 0.001 to 10 minutes and more preferably at 65 to 115°C for 0.01 to 5 minutes. However, the temperature range exhibiting the liquid crystal phase may vary depending on the type of the liquid crystal compound which forms the photopolymerizable coating layer. Thus, the treatment temperature and the treatment time period also vary depending thereon.

In the present invention, the selected ultraviolet light irradiation step (1) and the cholesteric regularity adjustment step (2) are repeated more than once. By repeating them more than once, it is possible to largely change the pitch in the resin layer having the cholesteric regularity. The condition for irradiation with the selected ultraviolet light for adjusting the cholesteric regularity is appropriately adjusted every repetition in order to adjust the reflection bandwidth. The number of times for repeating is not particularly limited, although twice is preferable in terms of productivity and equipments. In the method of irradiating once for a long time period, the polymerization degree is increased and the molecules do not become movable, whereby the pitch in the resin layer having the cholesteric regularity hardly changes.

"Repeating" the steps (1) and (2) herein refers to repetition of a sequence including the implementation of the step (1) followed by the implementation of the step (2). For example, "repeating the steps (1) and (2) twice" means implementation of the sequence twice. That is, when the steps (1) and (2) are repeated twice, these steps (1) and (2) are conducted in an order of the steps (1)-(2)-(1)-(2). Another step such as cooling may be performed between these steps.

In the present invention, the coating layer is cured (coating layer curing step).

The process for curing is not particularly limited as long as the coating layer is cured thereby to have the cholesteric regularity. Preferable process is irradiation with the main curing ultraviolet light so that the integrated light amount is 10 mJ/cm² or more. The ultraviolet light for main curing means an ultraviolet light whose wavelength range and illumination intensity are set to realize complete curing of the coating layer. With this main curing ultraviolet light, it is difficult to cause the variation in the crosslinking degrees of the liquid crystal in the coating layer along the thickness direction of the film.

The integrated light amount of this ultraviolet light is selected in the range of preferably 10 to 1000 mJ/cm² and more preferably 50 to 800 mJ/cm². The integrated light amount is measured on the substrate using an ultraviolet light actinometer, or is determined by measuring the illumination intensity using the illuminometer and calculating from equation (integrated light amount) = (illumination intensity) x (time). The irradiation direction may be such that the main curing ultraviolet light is given onto either the surface of the coating layer or the surface of the substrate. However, it is preferable to give irradiation onto the coating layer in terms of good irradiation efficiency of the ultraviolet light.

In the present invention, it is preferable to perform irradiation with the main curing ultraviolet light under a nitrogen atmosphere. By performing irradiation under the nitrogen atmosphere, it is possible to reduce the effect of the polymerization inhibition due to oxygen. The oxygen concentration upon irradiation with the main curing ultraviolet light is preferably 3% or less, more preferably 1% or less and particularly preferably 500 ppm or less.

The present invention includes a step of cooling the photopolymerizable coating layer on the substrate before the coating layer curing step. If the photopolymerizable coating layer kept at 20 to 40°C is irradiated with the aforementioned main ultraviolet light, it is possible to keep the pitch state in the resin layer having the cholesteric regularity after adjusting the cholesteric regularity.

By this coating layer curing step, it is possible to enhance a mechanical property of the resin layer having the cholesteric regularity with keeping its widened bandwidth.

The thickness of the resin layer having the cholesteric regularity is typically 1 to 100 µm, preferably 1 to 50 µm and more preferably 1 to 20 µm in terms of preventing a disturbance in the orientation and a decrease of the transmittance and in terms of broadness of selective reflection wavelength range (reflection wavelength band). The total thickness including the substrate, i.e., the thickness of the circular polarization separation sheet is typically 20 to 300 µm, preferably 20 to 200 µm and more preferably 30 to 100 µm.

The apparatus for the coating layer formation which is suitable for producing the circular polarization separation sheet of the present invention is defined by claim 6.

The feeding device and the coating head in the apparatus for the coating layer formation of the present invention are not particularly limited and those known publicly may be used.

With the apparatus for the coating layer formation of the present invention, the photopolymerizable composition applied by the coating head and the substrate may be the same ones as those described in a section of the circular polarization separation sheet of the present invention.

The unit of cooling the substrate on which the coating layer has been formed, used for the apparatus for the coating layer formation of the present invention, may be composed of, e.g., a cooling zone device or a cooling roll, and it is particularly preferable to be composed of the cooling zone device. The cooling unit may be a device which partially surrounds a feeding path of the substrate and keeps the temperature therein at the constant temperature suitable for curing the photopolymerizable composition. In the present invention, it is preferable to dispose all of the aforementioned cooling units before the selected ultraviolet light irradiation device and the main curing ultraviolet light irradiation device which will be described later, and it is more preferable to dispose them just before each of the selected ultraviolet light irradiation device and the main curing ultraviolet light irradiation device.

In the apparatus for the coating layer formation of the present invention, "before" means being before along the treatment flow of the substrate, and "after" means being after along the treatment flow of the substrate.

The selected ultraviolet light irradiation device used for the present invention is a device capable of performing ultraviolet light irradiation whose wavelength range and/or output power is selected for irradiation of the coating layer with the selected ultraviolet light. The selected ultraviolet light may be an ultraviolet light emitted in a specific narrow wavelength range or an ultraviolet light emitted with an adequate and weak output power. In the ultraviolet light in the specific narrow wavelength range, the width of the wavelength may be specifically within 100 nm. More specifically, the wavelength range which realizes the aforementioned width of the wavelength may be the wavelength range of 300 nm or more and less than 400 nm. By irradiation with such a selected ultraviolet light, it is possible to generate a gradient in a degree of the irradiation of the ultraviolet light along the thickness direction of the coating layer.

The wavelength range of the selected ultraviolet light may be set depending on an ultraviolet light absorption property of the photopolymerizable composition. For example, it is possible to set so as to selectively perform irradiation with the ultraviolet light having the width of the wavelength within 100 nm mainly including the wavelength at which the polymerization initiator contained in the photopolymerizable composition exhibits the maximum absorbance. The output power in the selected ultraviolet light irradiation device may be variable so as to adjust the output power optimal for the selected ultraviolet light irradiation, thereby being capable of performing the polymerization having the gradient of polymerization degrees in the portion close to and the portion far from the surface of the coating layer.

The device for irradiation with such a selected ultraviolet light may be specifically constituted by including a light source which emits the ultraviolet light in the specific narrow wavelength range or by providing a band pass filter which allows the ultraviolet light at the particular wavelength to pass, in a light path from the light source to the film to be irradiated. The amount of the ultraviolet light for irradiation may be regulated by making a voltage of the light source variable or providing a filter having a fine pore in the light path from the light source to the film to be irradiated. A mercury lamp and a metal halide ramp may be used as the light source of the selected ultraviolet light irradiation device.

In the apparatus for the coating layer formation of the present invention, the selected ultraviolet light irradiation device may be constituted so that the ultraviolet light irradiation is given onto the surface on which the coating layer has been formed. The device may also be constituted so that the ultraviolet light irradiation is given onto the surface opposite to the surface on which the coating layer has been formed. The device may also be constituted so that the ultraviolet light irradiation is given to both the coating layer-formed surface and the opposite surface. Irradiation with the ultraviolet light onto the coating layer-formed surface and the irradiation onto the opposite surface give, respectively, a gradient wherein the polymerization degree is reduced from the portion close to the sueface to the portion far from the surface of the coating layer, and a gradient wherein the polymerization degree is increased from the portion close to the sueface to the portion far from the surface of the coating layer.

The heating unit used for the apparatus for the coating layer formation of the present invention may be constituted of a heating zone device or a heating roll, and is particularly preferably the heating zone device. The heating zone device may be a device which partially surrounds the feeding path of the substrate and keep the temperature therein at a constant temperature suitable for curing the photopolymerizable composition.

The apparatus for the coating layer formation of the present invention preferably comprises a main curing ultraviolet light irradiation device disposed after the selected ultraviolet light irradiation device, for irradiating the coating layer with a main curing ultraviolet light after the layer is treated by said selected ultraviolet light irradiation device, for curing the coating layer.

The main curing ultraviolet irradiation device is not particularly limited, and those known publicly may be used. This ultraviolet light irradiated by the main curing ultraviolet irradiation device may be an ordinary ultraviolet light which has wider range and/or higher output power than those of the selected ultraviolet light, to perform curing of the coating layer with higher uniformity.

In the apparatus for the coating layer formation of the present invention, the main curing ultraviolet light irradiation device may be constituted so that the ultraviolet light irradiation is given onto the surface on which the coating layer has been formed. The device may also be constituted so that the ultraviolet light irradiation is given onto the surface opposite to the surface on which the coating layer has been formed. The device may also be constituted so that the ultraviolet light irradiation is given onto both the coating layer-formed surface and the opposite surface.

Preferably, the apparatus for the coating layer formation of the present invention comprises, in addition to the aforementioned constituents, a nitrogen substitution unit at a position where irradiation of the coating layer on said substrate with the main curing ultraviolet light is performed by said main curing ultraviolet light irradiation device. Specifically, it is preferable that the nitrogen substitution unit is disposed just before the main curing ultraviolet light irradiation device so that irradiation with the ultraviolet light may be performed under the nitrogen atmosphere. By providing the nitrogen substitution unit, it is possible to reduce the effect of the polymerization inhibition due to oxygen. The oxygen concentration upon irradiation with the main curing ultraviolet light is preferably 3% or less, more preferably 1% or less and particularly preferably 500 ppm or less. The nitrogen substitution unit may be constituted of a nitrogen purge box.

Preferably, the apparatus for the coating layer formation of the present invention comprises, in addition to the aforementioned constituents, a unit for giving a nature of orienting molecules in the photopolymerizable composition to the surface of the substrate sent out from the feeding device, before applying the photopolymerizable composition from the coating head onto the substrate. The molecule in the photopolymerizable composition refers to, specifically for example, a monomer capable of exhibiting a liquid crystallinity such as cholesteric liquid crystal phase, as described above. As the unit to impart such a nature to the substrate, specifically for example, it is possible to use a unit performing the rubbing, e.g., a rubbing roll. Furthermore, the rubbing unit may be constituted so that an orientation film is formed on the substrate by applying and drying inline and the rubbing treatment is given to the orientation film. When the orientation film has already been formed on the substrate, the unit may be constituted so as to give the rubbing treatment to the orientation film.

Preferably, the apparatus for the coating layer formation of the present invention comprises, in addition to the aforementioned constituents, a dryer for heating the coating layer applied from the coating head onto the substrate, before irradiating the coating layer with the selected ultraviolet light from the selected ultraviolet light irradiation device. The dryer may be a device which partially surrounds the feeding path of the substrate and keeps the temperature therein at a constant temperature suitable for drying the solvent when the solvent is contained in the photopolymerizable composition. By drying the solvent by the dryer, it is possible to accomplish better orientation of the molecule such as the aforementioned monomer.

The apparatus for the coating layer formation of the present invention will be specifically described hereinbelow with reference to the drawings.

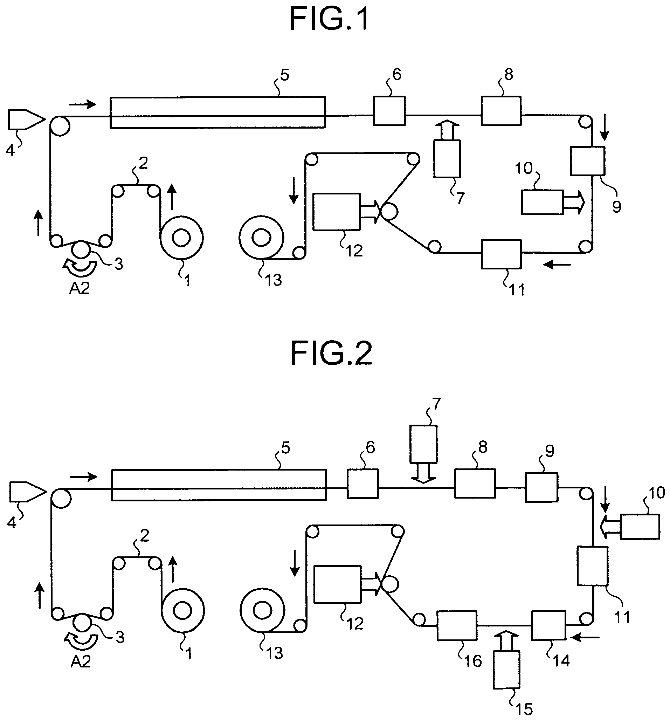

FIG. 1 is a schematic view showing one example of the constitution and movement of the apparatus for the coating layer formation according to the present invention. The apparatus shown in FIG. 1 is an apparatus for forming the coating layer on a substrate 2, and comprises a feeding device 1, a rubbing roll 3, a coating head 4, a dryer 5, a first cooling zone 6, a first selected ultraviolet light irradiation device 7, a first heating zone 8, a second cooling zone 9, a second selected ultraviolet light irradiation device 10, a second heating zone 11, a main curing ultraviolet light irradiation device 12 and a take-up device as a substrate housing unit, in this order. In the example of the apparatus shown in FIG. 1, the first selected ultraviolet light irradiation device 7 and the second selected ultraviolet light irradiation device 10 are constituted so as to perform ultraviolet light irradiation on the back surface (surface facing the substrate) of the coating layer, and the main curing ultraviolet light irradiation device 12 is constituted so as to perform the ultraviolet light irradiation on the front surface of the coating layer.

Prior to the formation of the coating layer by the apparatus for the coating layer formation of the present invention, an orientation film is formed on a resin film for the substrate, and the substrate 2 is then subjected to the formation of the coating layer by the apparatus of the present invention. The orientation film may be formed using another apparatus therefor or using the apparatus of the present invention. That is, the substrate is sent out from the feeding device 1; a liquid for forming the orientation film in applied thereon using the coating head 4 or another coating head; drying and curing are then performed if necessary using the dryer 5 and the main curing ultraviolet light irradiation device 12; and the resultant is taken up by the take-up device 13, to thereby prepare a roll of the substrate on which the orientation film has been previously formed. This may be further subjected to the formation of the coating layer by the apparatus for the coating layer formation of the present invention as will be described below.

Subsequently, the operation of the coating layer formation by the apparatus for the coating layer formation of the present invention will be described.

The surface of the substrate 2 sent out from the feeding device 1 having the orientation film is given a rubbing treatment with the rubbing roll 3. As a preferable embodiment of the rubbing treatment in the apparatus shown in FIG. 1, the rubbing roll 3 rotates in contact with the substrate 2 so that the rubbing roll rotates in a direction opposite to the traveling direction of the substrate (i.e., rotate in the direction of an arrow A2 in FIG. 1). The embodiment of the rubbing treatment is not limited thereto. If necessary, the the rubbing treatment may be performed in any direction with respect to the traveling direction of the substrate 2.

Subsequently, onto the surface of the substrate 2 having the orientation film that has given the rubbing treatment, the photopolymerizable composition is discharged from the coating head 4 for application, to form the coating layer. It is preferable that the photopolymerizable composition is applied onto the orientation film that has given the rubbing treatment. Thereby, the molecule in the photopolymerizable composition may be oriented in the desired direction. In the example of the present embodiment, as the photopolymerizable composition, the same ones as those described in the section of the circular polarization separation sheet of the present invention may be used.

The coating layer applied on the substrate 2 is dried by the dryer 5, subsequently cooled to 20 to 40°C in the first cooling zone 6, and subjected to the irradiation with the selected ultraviolet light by the first selected ultraviolet light irradiation device 7.

A cooling time period in the first cooling zone 6 may be regulated by the length and the line speed of the first cooling zone along the feeding path of the substrate so that the temperature of the substrate is 20 to 40°C. Irradiation of the photopolymerizable coating layer kept at 20 to 40°C by that regulation with the selected ultraviolet light gives the intensity distribution of the light along the thickness direction of the coating layer. As a result, the cholesteric resin layer having a variety in the crosslinking degrees along the thickness direction of the film may be formed.

The condition for the irradiation by the first selected ultraviolet light irradiation device 7 may be appropriately regulated depending on properties desired in the photopolymerizable composition and products. As described above, the selected ultraviolet light has a maximum illumination intensity at the wavelength of 300 nm or more and less than 400 nm, and/or the width of the wavelength is within 100 nm. The output power of the first selected ultraviolet light irradiation device 7 may be appropriately regulated depending on properties desired in the photopolymerizable composition and products. In the present embodiment, the first selected ultraviolet light irradiation device 7 gives irradiation with the ultraviolet light on the back surface of the coating layer (the surface facing the substrate). However, the irradiation may be performed on the front surface or from both the front and back surfaces of the coating layer. Irradiation of the coating layer with the selected ultraviolet light in this way can give variety to the polymerization degree of the polymerizable liquid crystal compound in the photopolymerizable composition along the thickness direction of the coating layer. Specifically, the polymerization proceeds relatively slowly on the front surface of the coating layer because the polymerization inhibition due to oxygen affects relatively largely, whereas the longer the distance from the front surface along the thickness direction of the coating layer is, the faster the polymerization tends to proceed, because the effect of the polymerization inhibition due to oxygen becomes smaller. Thus, the gradient in the polymerization degree occurs along the thickness direction of the coating layer. The gradient in the polymerization degree may be made steeper by irradiating the back surface of the coating layer with the ultraviolet light.

The properties such as the irradiation wavelength range and the output power of the first selected ultraviolet light irradiation device 7 may be adjusted so that the optical property of the product to be produced becomes optimal. For example, a unit of measuring spectra of the transmittance of the produced laminate film (not shown in the figure) is provided between the main curing ultraviolet light irradiation device 12 and the take-up device 13, by which the output power of the first selected ultraviolet light irradiation device 7 may be regulated and the irradiation wavelength range may be changed, so that the selective reflection bandwidth of the circular polarization separation sheet becomes maximum. The irradiation wavelength range may be changed by changing the filter provided in the light path from the light source in the first selected ultraviolet light irradiation device 7 to the film to be irradiated.

The substrate 2 having the coating layer that has been irradiated with the selected ultraviolet light by the first selected ultraviolet light irradiation device 7 is subsequently passed through and heated in the first heating zone 8. In the oriented and partially polymerized polymerizable liquid crystal compound in the photopolymerizable composition, the portion having lower polymerization degree tends to swell easily to cause greater change upon receiving heat. Thus the heating causes the gradient of a cholesteric orientation. The heating temperature in the first heating zone 8 may be variable. The heating time period in the first heating zone 8 may be regulated by the length and line speed of the first heating zone 8 along the feeding path of the substrate. The desired orientation gradient may be obtained by regulating them.

The substrate heated by the first heating unit 8 is subsequently cooled to 20 to 40°C by the second cooling unit 9, then subjected to the irradiation of the selected ultraviolet light by the second selected ultraviolet light irradiation device 10, and then is passed through and heated in the second heating unit 11.

The cooling time period in the second cooling unit 9 may be regulated by the length and the line speed of the second cooling unit along the feeding path of the substrate so that the temperature of the substrate is 20 to 40°C. The photopolymerizable coating layer kept at 20 to 40°C by that regulation is then irradiated with the aforementioned selected ultraviolet light, to generate the intensity distribution of the light along the thickness direction of the coating layer. As a result, the cholesteric resin layer having a variety in the crosslinking degrees along the thickness direction of the film can be formed.

The irradiation and the output in the second selected ultraviolet light irradiation device 10 are performed in the same way as in the first selected ultraviolet light irradiation device 7.

In the present embodiment, the second selected ultraviolet light irradiation device 10 gives irradiation with the ultraviolet light onto the back surface of the coating layer. Alternatively, irradiation may also be given onto the front surface of the coating layer or from both front and back surfaces of the coating layer. Irradiation of the coating layer with the selected ultraviolet light in this way can give greater variety to the polymerization degree of the polymerizable liquid crystal compound in the photopolymerizable composition along the thickness direction of the coating layer. Specifically, the polymerization proceeds relatively slowly on the front surface of the coating layer because the polymerization inhibition due to oxygen affects relatively largely, whereas the longer the distance from the front surface along the thickness direction of the coating layer is, the faster the polymerization tends to proceed, because the effect of the polymerization inhibition due to oxygen becomes smaller. Thus, the gradient in the polymerization degree occurs along the thickness direction of the coating layer. The gradient in the polymerization degree may be made steeper by irradiating the back surface of the coating layer with the ultraviolet light. In the oriented and partially polymerized polymerizable liquid crystal compound in the photopolymerizable composition, the portion having lower polymerization degree tends to swell easily to cause greater change upon receiving heat from the second heating unit 11. Thus the heating causes the gradient of a cholesteric orientation. The heating temperature in the second heating zone 11 may be variable. The heating time period in the second heating unit 11 may be regulated by the length and line speed of the second heating unit 11 along the feeding path of the substrate. The desired orientation gradient may be obtained by regulating them.

In the apparatus for the coating layer formation shown in FIG. 1, the two cooling zones 6 and 9, the two selected ultraviolet light irradiation devices 7 and 10, and the two heating zones 8 and 11 which adjust the cholesteric regularity are disposed. However, the number of the cooling zones, the selected ultraviolet light irradiation devices and the heating zones may be three or more.

The substrate heated by the second heating zone 11 is then irradiated with the main curing ultraviolet light by the main curing ultraviolet light irradiation device 12. The irradiation of the ultraviolet light by the main curing ultraviolet light irradiation device 12 may be performed with the wavelength and the output power that are sufficient for curing the entire coating layer.

Although not shown in the figure, it is preferable that the apparatus for the coating layer formation of the present invention is provided with a nitrogen substitution unit at the region where irradiation with the main curing ultraviolet light is performed so that the irradiation with the ultraviolet light is perfromed under the nitrogen atmosphere. By providing the nitrogen substitution unit, it is possible to reduce the effect of the polymerization inhibition due to oxygen. The oxygen concentration upon irradiation with the main curing ultraviolet light is preferably 3% or less, more preferably 1% or less and particularly preferably 500 ppm or less. The nitrogen substitution unit may be constituted of the nitrogen purge box and the like.

In the present embodiment, the main curing ultraviolet light irradiation device 12 gives irradiation with the ultraviolet light on the front surface of the coating layer. However, the irradiation may be performed on the back surface or both the front and back surfaces of the coating layer. The laminate film obtained by curing the coating layer by the main curing ultraviolet light irradiation device 12 may be taken up by the take-up device 13.

The apparatus for the coating layer formation of the present invention is not limited to those specifically described above but also includes those within the scope of the claims of the present application and an equivalent thereof. For example, in the apparatus specifically described above, the apparatus providing only one layer of the coating layer of the photopolymerizable composition has been described. However, it is possible to constitute an apparatus wherein another one or more sets of the constitutions from the coating head to the main curing ultraviolet light irradiation device may be provided on a production line and one or both surfaces of the substrate are provided with two or more layers of the coating layer of the photopolymerizable composition. When two or more layers of the coating layer of the photopolymerizable composition are provided, a non-contact reversing device may be provided if necessary. The coating head may be of any constitution which can apply a liquid onto the substrate surface such as, in addition to conventional die type head, wire bars and brushes. When two or more layers of the coating layer of the photopolymerizable composition are provided, the coating layers of the same material may be provided or the coating layers of different materials may be provided. The apparatus for providing a plurality of the coating layers may become complicated. However, by forming at least one layer among them in accordance with the method comprising the ultraviolet light irradiation by the selected ultraviolet light irradiation, it is possible to obtain a circular polarization separation sheet having an extended effective reflection bandwidth with less number of layers compared with the conventional art.

The apparatus for the coating layer formation of the present invention may include any optional constituents in addition to the aforementioned constituents. For example, a device for giving corona discharge treatment to the substrate may be provided before the coating head 4 in order to enhance compatibility with the photopolymerizable composition. An electricity removal device and a dust removal device for removing static electricity and dusts generated by the rubbing treatment from the substrate may be provided between the rubbing unit 3 and the coating head 4. A lamination take-up device which delaminates a protection film from the substrate may be provided between the feeding device 1 and the rubbing roll 3. A lamination feeding device for attaching the protection film on the front surface of the coating layer may be provided between the main curing ultraviolet light irradiation device 12 and the take-up device 13.

### EXAMPLES

The present invention will be described with reference to the following Examples and Comparative Examples, but the present invention is not limited to the following Examples. Parts and % are based on the weight unless otherwise specified.

In the following Examples, one having an E type die was used as a coating head; a film of alicyclic olefin polymer having a thickness of 100 µm (brand name: Zeonor film supplied from Optes Inc.) was used as a substrate; and POVAL (PVA) was used as a coating liquid for forming an orientation film. As a coating liquid-containing a polymerizable liquid crystal compound (photopolymerizable composition), a composition containing a cholesteric compound (this composition may be referred to hereinafter as a "photopolymerizable composition") was used.

### (Example 1)

The present Example was performed using the apparatus in FIG. 1 described previously. Thus, the following explanation will be described with reference to FIG. 1.

First, application of the coating liquid for forming the orientation film was performed.

As a substrate 2 was run at a running speed of 10 m/minute from a feeding device 1, the coating liquid for forming the orientation film was discharged from the coating head 4 for application on the substrate. Subsequently the layer was dried by a dryer 5, and the film was taken up by a take-up device 13.

Subsequently, the photopolymerizable composition was applied.

As the photopolymerizable composition, 90.3 parts of a polymerizable liquid crystal compound having a birefringence Δn of 0.18, 6.7 parts of a chiral agent (LC756 supplied from BASF), 3.1 parts of a polymerization initiator (Irgacure 907 supplied from Ciba Specialty Chemicals) and 0.1 parts of a surfactant (Surflon KH-40 supplied from Seimi Chemical Co., Ltd.) were dissolved in methyl ethyl ketone so that a solid concentration was 40% by weight. The mixture was then filtrated through a syringe filter made of polytetrafluoroethylene having a pore diameter of 0.45 µm. The polymerizable liquid crystal compound and the chiral agent may be referred to as a "cholesteric liquid crystal compound".

The substrate 2 having the orientation film applied thereon was loaded on the feeding device 1. The substrate 2 was sent out from the feeding device 1 at a running speed of 10 m/minute. A rubbing treatment was given to the orientation film on the substrate 2 with the rubbing device 3. The aforementioned photopolymerizable composition was applied thereon from the coating head 4 to form a layer, which was then dried and oriented by the dryer 5.

The coating layer containing the dried and oriented cholesteric liquid crystal compound (photopolymerizable coating layer) was cooled to 25°C by a first cooling unit 6. Then irradiation with the ultraviolet light having an illumination intensity of 4 mW/cm² was given onto the substrate surface for one second by a first selected ultraviolet light irradiation device 7. Then heating/drying at 100°C for 60 seconds was performed in a first heating zone 8. The coating layer was cooled to 25°C in a second cooling device 9. Then irradiation with the ultraviolet light having an illumination intensity of 4 mW/cm² was given onto the substrate surface for one second by a second selected ultraviolet light irradiation device 10. Then heating/drying at 100°C for 60 seconds was performed in a second heating zone 11. A band pass filter of 365 nm was used upon the first and second selected ultraviolet light irradiations. A light transmitting region in the band pass filter of 365 nm is 346 to 403 nm, and a bandwidth (width of wavelength range) is 57 nm. The illumination intensity was measured using an illuminometer with an ultraviolet light actinometer UV-M03 (as a sensor, UV-SN35 having a peak sensitivity at 360 nm was used) supplied from Orc Manufacturing Co., Ltd.

Subsequently, the coating layer containing the cholesteric liquid crystal compound (photopolymerizable coating layer) was irradiated with the ultraviolet light having the illumination intensity of 100 mW/cm² under a nitrogen atmosphere at 25°C for 5 seconds from the surface of the coating layer using a main curing ultraviolet light irradiation device 12, and was taken up by a take-up device 13. The illumination intensity was measured using an illuminometer with an ultraviolet light actinometer UV-M03 (as a sensor, UV-SN35 having a peak sensitivity at 360 nm was used) supplied from Orc Manufacturing Co., Ltd.

By the aforementioned series of steps, a laminate film (circular polarization separation sheet) having an orientation film and a cured coating layer of the photopolymerizable composition (resin layer having the cholesteric regularity) formed on the substrate was obtained. The selective reflection bandwidth (bandwidth (nm) of the wavelength having the transmittance of 70% or less) in this circular polarization separation sheet was measured with incidence of parallelized white light into the circular polarization separation sheet at an incident angle of 0 degree. Measurement was performed using a spectroscope (X-2600 supplied from Soma Optics Ltd.). A half value width of the maximum reflectance (difference between the maximum wavelength and the minimum wavelength showing 1/2 of the maximum reflectance) was taken as the width of the selective reflection bandwidth. Results of the measurement and conditions for producing the laminate film were shown in Table 1.

In the aforementioned Example, the extension of the reflection bandwidth in the visible range of the laminate film (circular polarization separation sheet) was realized by repeating the cooling, the selected ultraviolet light irradiation and heating. The direction of the ultraviolet light irradiation is not necessarily limited to the aforementioned method. Depending on the conditions, the direction of irradiation may be suitably selected so as to irradiate the surface of the coating layer, or the opposite surface of the coating layer.

### (Comparative Example 1)

The photopolymerizable composition containing the cholesteric liquid crystal compound was applied, dried and oriented in the same way as in Example 1. Subsequently, without performing the first and second selected ultraviolet light irradiations, the coating layer of the photopolymerizable composition (photopolymerizable coating layer) was cured by irradiation with the ultraviolet light at 100 mW/cm² under the nitrogen atmosphere at 25°C for 5 seconds from the coating layer surface using the main curing ultraviolet light irradiation device 12, and was taken up by a take-up device 13.

The selective reflection bandwidth (bandwidth (nm) of the wavelength having the transmittance of 70% or less) in this laminate film in Comparative Example 1 was measured in the same method as the aforementioned one. The results of the measurement and conditions for producing the laminate film were also shown in Table 1.

### (Comparative Examples 2 to 5)

The laminate films were made in Comparative Examples 2 to 5 in the same way as in Example 1, except that the second selected ultraviolet light irradiation device was not used in Comparative Example 2, except that the second heating was not performed in Comparative Example 3, except that the second selected ultraviolet light irradiation was performed at 80°C without cooling by the cooling unit in Comparative Example 4 and except that the first and second selected ultraviolet light irradiations were performed at the illumination intensity of 20 mW/cm² in Comparative Example 5.

The selective reflection bandwidth (bandwidth (nm) of the wavelength having the transmittance of 70% or less) in these laminate films in Comparative Examples 2 to 5 was measured in the same method as the aforementioned one. The results of the measurement and conditions for producing the laminate films were also shown in Table 1.

**Table 1**

| | | Ex.1 | Comp. Ex.1 | Comp. Ex.2 | Comp. Ex.3 | Comp. Ex.4 | Comp. Ex.5 |
|---|---|---|---|---|---|---|---|
| Band widening UV-1 | Irradiation direction | On substrate surface | | On substrate surface | On substrate surface | On substrate surface | On substrate surface |
| (step 1-1) | Illumination intensity (mW/cm²) | 4 | | 4 | 4 | 4 | 20 |
| | Time (second) | 1 | | 1 | 1 | 1 | 1 |
| | Temperature (°C) | 25 | | 25 | 25 | 25 | 25 |
| | Atmosphere | Air | | Air | Air | Air | Air |
| Heating -1 | Temperature (°C) | 100 | | 100 | 100 | 100 | 100 |
| (step 2-1) | Time (second) | 60 | | 60 | 60 | 60 | 60 |
| | Atmosphere | Air | | Air | Air | Air | Air |
| Band widening UV-2 | Irradiation direction | On substrate surface | | | On substrate surface | On substrate surface | On substrate surface |
| (step 1-2) | Illumination intensity (mW/cm²) | 4 | | | 4 | 4 | 20 |
| | Time (second) | 1 | | | 1 | 1 | 1 |
| | Temperature (°C) | 25 | | | 25 | 80 | 80 |
| | Atmosphere | Air | | | Air | Air | Air |
| Heating -2 | Temperature (°C) | 100 | | | | 100 | 100 |
| (step 2-2) | Time (second) | 60 | | | | 60 | 60 |
| | Atmosphere | Air | | | | Air | Air |
| Main curing UV | Irradiation direction | On coating surface | On coating surface | On coating surface | On coating surface | On coating surface | On coating surface |
| (step3) | Illumination intensity (mW/cm²) | 100 | 100 | 100 | 100 | 100 | 100 |
| | Time (second) | 5 | 5 | 5 | 5 | 5 | 5 |
| | Temperature (°C) | 25 | 25 | 25 | 25 | 25 | 25 |
| | Atmosphere | Nitrogen | Nitrogen | Nitrogen | Nitrogen | Nitrogen | Nitrogen |
| Selective reflection bandwidth (bandwidth of wavelength with transmittance of 70% or less (nm)) | | 350 | 80 | 200 | 200 | 80 | 80 |

As shown in Table 1, the selective reflection bandwidth was 80 nm in Comparative Example 1, 200 nm in Comparative Example 2, 200 nm in Comparative Example 3, 80nm in Comparative Example 4 and 80nm in Comparative Example 5, while the selective reflection bandwidth in Example 1 was 350 nm. Thus, it was confirmed that Example 1 has a widened bandwidth when it is compared with Comparative Examples 2 to 5.

### (Example 2)

The present Example was performed using the apparatus in FIG. 2 described previously. Thus, the following explanation will be described with reference to FIG. 2.

This Example is different from Example 1 in that a photopolymerizable composition containing another liquid crystal compound was used, in that three cooling zones, three selected ultraviolet light irradiation devices and three heating zones for adjusting the cholesteric regularity were used, and in that irradiation with the selected ultraviolet light was performed from the coating layer surface.

First, application of the liquid for forming the orientation film was performed.

As the substrate 2 was run at a running speed of 10 m/minute from the feeding device 1, the coating liquid for forming the orientation film was discharged from the coating head 4 for application on the substrate. Subsequently the layer was dried by the dryer 5, and the film was taken up by the take-up device 13.

Subsequently, the photopolymerizable composition was applied.

As the photopolymerizable composition, 92.3 parts of a polymerizable liquid crystal compound having the birefringence Δn of 0.14, 4.7 parts of the chiral agent (LC756 supplied from BASF), 3.1 parts of the polymerization initiator (Irgacure 907 supplied from Ciba Specialty Chemicals) and 0.1 parts of the surfactant (Surflon KH-40 supplied from Seimi Chemical Co., Ltd.) were dissolved in methyl ethyl ketone so that the solid concentration was 40% by weight. The mixture was then filtrated through the syringe filter made of polytetrafluoroethylene having the pore diameter of 0.45 µm. The polymerizable liquid crystal compound and the chiral agent may be referred to as the "cholesteric liquid crystal compound".

The substrate 2 having the orientation film applied thereon was loaded on the feeding device 1. The substrate 2 was sent out from the feeding device 1 at a running speed of 10 m/minute. A rubbing treatment was given to the orientation film on the substrate 2 with the rubbing device 3. The aforementioned photopolymerizable composition was applied thereon from the coating head 4 to form a layer, which was then dried and oriented by the dryer 5.

Further, the coating layer containing the dried and oriented cholesteric liquid crystal compound (photopolymerizable coating layer) was cooled to 25°C by the first cooling unit 6. Then irradiation with the ultraviolet light at 0.4 mW/cm² was given onto the substrate surface for one second by the first selected ultraviolet light irradiation device 7. Then heating/drying at 100°C for 60 seconds was performed in the first heating zone 8. Further the coating layer was cooled to 25°C in the second cooling unit 9. Then irradiation with the ultraviolet light at 0.4 mW/cm² was given onto the substrate surface for one second by the second selected ultraviolet light irradiation device 10. Then heating/drying at 100°C for 60 seconds was performed in the second heating zone 11. Further the coating layer was cooled to 25°C in a third cooling unit 14. Then irradiation with the ultraviolet light at 0.4 mW/cm² was given onto the substrate surface for one second by a third selected ultraviolet light irradiation device 15. Then the heating/drying at 100°C for 60 seconds was performed in a third heating zone 16. A band pass filter of 313 nm was used upon the first to third irradiations with the selected ultraviolet light. A light transmitting region of the band pass filter is 299 to 345 nm, and the bandwidth (width of wavelength range) is 46 nm. The illumination intensity was measured using an illuminometer with an ultraviolet light actinometer UV-M03 (as the sensor, UV-SN31 having the peak sensitivity at 310 nm was used) supplied from Orc Manufacturing Co., Ltd.

Subsequently, the coating layer containing the cholesteric liquid crystal compound (photopolymerizable coating layer) was irradiated with the ultraviolet light having the illumination intensity of 100 mW/cm² from the surface of the coating layer under the nitrogen atmosphere at 25°C for 5 seconds using the main curing ultraviolet light irradiation device 12, and taken up by the take-up device 13. The illumination intensity was measured using an illuminometer with an ultraviolet light actinometer UV-M03 (as the sensor, UV-SN31 having the peak sensitivity at 310 nm was used) supplied from Orc Manufacturing Co., Ltd.

By the aforementioned series of steps, a laminate film (circular polarization separation sheet) having an orientation film and a cured coating layer of the photopolymerizable composition (resin layer having the cholesteric regularity) had been formed on the substrate was obtained. The selective reflection bandwidth (bandwidth (nm) of the wavelength having the transmittance of 70% or less) in this circular polarization separation sheet was measured with incidence of the parallelized white light into the circular polarization separation sheet at an incident angle of 0 degree. Measurement was performed using the spectroscope (S-2600 supplied from Soma Optics Ltd.). A half value width of the maximum reflectance (difference between the maximum wavelength and the minimum wavelength showing 1/2 of the maximum reflectance) was taken as the width of the selective reflection bandwidth. Results of the measurement and conditions for producing the laminate film were shown in Table 2.

In the aforementioned Example, the extension of the reflection bandwidth in the visible range of the laminate film (circular polarization separation sheet) was realized by repeating the cooling, the selected ultraviolet light irradiation and heating. The direction of the ultraviolet light irradiation is not necessarily limited to the aforementioned method. Depending on the conditions, the direction of irradiation may be suitably selected so as to irradiate the surface of the coating layer, or the opposite surface of the coating layer.

### (Comparative Example 6)

The photopolymerizable composition containing the cholesteric liquid crystal compound was applied, dried and oriented in the same way as in Example 2 except that the second and third selected ultraviolet light irradiation, heating by the heating zone and cooling by the cooling unit were not performed. Subsequently, the coating layer (photopolymerizable coating layer) of the photopolymerizable composition was cured by irradiation the ultraviolet light at 100 mW/cm² from the coating layer surface under the nitrogen atmosphere at 25°C for 5 seconds using the main curing ultraviolet light irradiation device 12, and taken up by the take-up device 13.

The selective reflection bandwidth (bandwidth (nm) of the wavelength having the transmittance of 70% or less) in this laminate film in Comparative Example 6 was measured by the same method as described above. The results of the measurement and conditions for producing the laminate film were also shown in Table 2.

**Table 2**

| | | Ex.2 | Comp. Ex.6 |
|---|---|---|---|
| Band widening UV-1 | Irradiation direction | On coating surface | On coating surface |
| (step 1-1) | Illumination intensity (mW/cm²) | 0.4 | 0.4 |
| | Time (second) | 1 | 1 |
| | Temperature (°C) | 25 | 25 |
| | Atmosphere | Air | Air |
| Heating-1 | Temperature (°C) | 100 | 100 |
| (step 2-1) | Time (second) | 60 | 60 |
| | Atmosphere | Air | Air |
| Band widening UV-2 | Irradiation direction | On coating surface | |
| (step 1-2) | Illumination intensity (mW/ cm²) | 0.4 | |
| | Time (second) | 1 | |
| | Temperature (°C) | 25 | |
| | Atmosphere | Air | |
| Heating-2 | Temperature (°C) | 100 | |
| (step 2-2) | Time (second) | 60 | |
| | Atmosphere | Air | |
| Band widening UV-3 | Irradiation direction | On coating surface | |
| (step 1-3) | Illumination intensity (mW/cm²) | 0.4 | |
| | Time (second) | 1 | |
| | Temperature (°C) | 25 | |
| | Atmosphere | Air | |
| Heating-3 | Temperature (°C) | 100 | |
| (step 2-3) | Time (second) | 60 | |
| | Atmosphere | Air | |
| Main curing UV | Irradiation direction | On coating surface | On coating surface |
| (step 3) | Illumination intensity (mW/cm²) | 100 | 100 |
| | Time (second) | 5 | 5 |
| | Temperature (°C) | 25 | 25 |
| | Atmosphere | Nitrogen | Nitrogen |
| Selective reflection bandwidth (bandwidth of wavelength with transmittance of 70% or less (nm)) | | 200 | 60 |

As shown in Table 2, the selective reflection bandwidth in Example 2 was 200 nm whereas the selective reflection bandwidth in Comparative Example 6 was 60nm, indicating that Example 6 had a widened bandwidth than Comparative Example 6.

### INDUSTRIAL APPLICABILITY

According to the present invention, cooling of the photopolymerizable coating layer containing the cholesteric liquid crystal compound on the substrate to an appropriate temperature (20 to 40°C), repetition of irradiation of the layer with the ultraviolet light having a selected wavelength (300 to 400 nm) with an appropriate output power and heating of the layer, and subsequent curing of the layer with the ultraviolet light with an appropriate output power can extend the selective reflection bandwidth in the visible range of the photopolymerizable coating layer (liquid crystal coating layer) without affecting the substrate.

Depending on the liquid crystal compound, it is also possible to extend the selective reflection bandwidth in the visible range in the liquid crystal coating layer by cooling the coating layer on the substrate to the appropriate temperature (20 to 40°C) and then repeating irradiation of the layer with the ultraviolet light with an appropriate output power without selecting the wavelength and heating, followed by curing of the layer with an ultraviolet light with an appropriate output power.

With the method for producing the circular polarization separation sheet and the apparatus for the coating layer formation of the present invention, the coating layer of the photopolymerizable composition containing the liquid crystal compound can be formed and then the layer can be photopolymerized and cured, to thereby produce a laminate film which reflects the light in the entire wavelength range in the visible range. This laminate film has a suitable function as a circular polarization separation sheet. By incorporating this circular polarization separation sheet, it is possible to produce a film useful as a variety of optical films such as brightness enhancement films. By using the circular polarization separation sheet produced by the present invention, it is possible to increase luminance of the liquid crystal device.

## Claims

1. A method for producing a circular polarization separation sheet comprising:
a coating layer forming step of applying on a substrate a photopolymerizable composition containing a photopolymerization initiator and a polymerizable cholesteric liquid crystal compound, to obtain a coating layer; and
a resin layer forming step of converting said coating layer into a resin layer having a cholesteric regularity,
wherein said resin layer forming step includes:
a selected ultraviolet light irradiation step (i) of cooling the coating layer to 20 to 40°C, and then irradiating said coating layer with a selected ultraviolet light having an illumination intensity of 0.1 mW/cm² or more and less than 10 mW/cm² under a temperature at 20 to 40°C for 0.1 to 6 seconds in the presence of oxygen wherein a gradient in the polymerization degree occurs along the thickness direction of the coating layer, the selected ultraviolet light does not cause complete curing;
a cholesteric regularity adjustment step (ii) of changing a cycle of the cholesteric regularity in said coating layer; and
a coating layer curing step (iii) of curing said coating layer, to realize a complete curing of the coating layer,
wherein said selected ultraviolet light irradiation step (i) and said cholesteric regularity adjustment step (ii) are repeated more than once in said resin layer forming step, and
wherein, in said selected ultraviolet light irradiation step (i), irradiation is given not on a front surface of the coating layer but on a surface of the substrate and thereby on a back surface of the coating layer facing the substrate.

2. The method for producing the circular polarization separation sheet according to claim 1 wherein a width of a wavelength range of the selected ultraviolet light used for said selected ultraviolet light irradiation step (i) is within 100 nm.

3. The method for producing the circular polarization separation sheet according to claim 1 wherein the selected ultraviolet light used for said selected ultraviolet light irradiation step (i) has a maximum illumination intensity at a wavelength of 300 nm or more and less than 400 nm.

4. The method for producing the circular polarization separation sheet according to claim 1 wherein said coating layer curing step (iii) is a step of curing the coating layer by irradiation with a main curing ultraviolet light so that an integrated light amount is 10 mJ/cm² or more.

5. The method for producing the circular polarization separation sheet according to claim 1 wherein said sequence of said selected ultraviolet light irradiation step (i) and said cholesteric regularity adjustment step (ii) is performed, then said sequence of said selected ultraviolet light irradiation step (i) and said cholesteric regularity adjustment step (ii) is again performed, and then said coating layer curing step (iii) is performed.

6. An apparatus for coating layer formation capable of being used for the method for producing the circular polarization separation sheet according to claim 1, comprising:
a feeding device (1) arranged for continuously sending out said substrate (2); and
a coating head (4) arranged for applying said photopolymerizable composition onto the substrate (2) sent out from said feeding device (1) to form said coating layer; wherein said apparatus also comprises two or more series of:
a unit (6, 9) arranged for cooling the substrate on which said coating layer has been formed so as to cool said coating layer to 20 to 40°C;
a selected ultraviolet light irradiation device (7) arranged for irradiating said coating layer with a selected ultraviolet light having an illumination intensity of 0.1 mW/cm² or more and less than 10 mW/cm² under a temperature at 20 to 40°C for 0.1 to 6 seconds in the presence of oxygen wherein a gradient in the polymerization degree occurs along the thickness direction of said coating layer; and
a unit (8, 11) arranged for heating the substrate on which said coating layer has been formed, wherein said apparatus comprises a main curing ultraviolet light irradiation device (12) disposed after said selected ultraviolet light irradiation device (7), arranged for irradiating said coating layer with a main curing ultraviolet light after said layer is treated by said selected ultraviolet light irradiation device (7), for curing the coating layer, wherein said selected ultraviolet light irradiation device (7) is arranged to irradiate not a front surface of the coating layer but a surface of the substrate, and thereby a back surface of the coating layer facing the substrate.

7. The apparatus for the coating layer formation according to claim 6 wherein all of said cooling units (6, 9) are disposed before said main curing ultraviolet light irradiation device (12).

8. The apparatus for the coating layer formation according to claim 6 comprising a nitrogen substitution unit at a position where irradiation of the coating layer on said substrate (2) with the main curing ultraviolet light is performed by said main curing ultraviolet light irradiation device (12).

9. The apparatus for the coating layer formation according to claim 6 further comprising a unit arranged for giving a nature of orienting molecules in said photopolymerizable composition to the surface of the substrate (2) sent out from said feeding device (1), before applying said photopolymerizable composition from said coating head (4) onto said substrate (2).

10. The apparatus for the coating layer formation according to claim 6 further comprising a dryer (5) arranged for heating the coating layer applied from said coating head (4) onto said substrate, before irradiating the coating layer with the selected ultraviolet light from said selected ultraviolet light irradiation device (7).

## Patentansprüche

1. Verfahren zur Herstellung einer Zirkularpolarisations-Trennfolie, umfassend:
einen Überzugsschichtbildungsschritt des Auftragens einer photopolymerisierbaren Zusammensetzung, enthaltend einen Photopolymerisationsinitiator und eine polymerisierbare cholesterische Flüssigkristallverbindung, auf ein Substrat unter Bildung einer Überzugsschicht; und
einen Harzschichtbildungsschritt des Umwandelns der Überzugsschicht in eine Harzschicht mit einer cholesterischen Ordnung,
wobei der Harzschichtbildungsschritt umfasst:
einen Schritt der Bestrahlung mit ausgewähltem ultraviolettem Licht (i): Abkühlen der Überzugsschicht auf 20 bis 40°C, und anschließend Bestrahlung der Überzugsschicht mit ausgewähltem ultraviolettem Licht mit einer Beleuchtungsstärke von 0,1 mW/cm² oder mehr und weniger als 10 mW/cm² bei einer Temperatur von 20 bis 40°C für 0,1 bis 6 Sekunden in der Gegenwart von Sauerstoff, wobei der Gradient des Polymerisationsgrads entlang der Dickenrichtung der Überzugsschicht auftritt, und das ausgewählte ultraviolette Licht keine vollständige Härtung verursacht;
einen Schritt der Einstellung der cholesterischen Ordnung (ii): Verändern des Zyklus der cholesterischen Ordnung in der Überzugsschicht; und
einen Überzugsschichthärtungsschritt (iii): Härten der Überzugsschicht unter Realisierung einer vollständigen Härtung der Überzugsschicht,
wobei der Schritt der Bestrahlung mit ausgewähltem ultraviolettem Licht (i) und der Schritt zur Einstellung der cholesterischen Ordnung (ii) mehr als einmal im Harzschichtbildungsschritt wiederholt werden, und
wobei im Schritt der Bestrahlung mit dem ausgewählten ultravioletten Licht (i) die Bestrahlung nicht auf einer Vorderseite der Überzugsschicht vorgenommen wird, sondern auf einer Seite des Substrats, und dadurch auf einer Rückseitenfläche der Überzugsschicht, die dem Substrat zugewandt ist.

2. Verfahren zur Herstellung der Zirkularpolarisations-Trennfolie gemäß Anspruch 1, wobei die Breite des Wellenlängenbereichs des ausgewählten ultravioletten Lichts, das für den Bestrahlungsschritt mit dem ausgewählten ultravioletten Licht (i) verwendet wird, innerhalb von 100 nm liegt.

3. Verfahren zur Herstellung der Zirkularpolarisations-Trennfolie gemäß Anspruch 1, wobei das für den Bestrahlungsschritt mit ausgewähltem ultraviolettem Licht (i) verwendete ausgewählte ultraviolette Licht eine maximale Beleuchtungsstärke bei einer Wellenlänge von 300 nm oder mehr und weniger als 400 nm aufweist.

4. Verfahren zur Herstellung der Zirkularpolarisations-Trennfolie gemäß Anspruch 1, wobei der Überzugsschichthärtungsschritt (iii) ein Schritt des Härtens der Überzugsschicht durch Bestrahlung mit ultraviolettem Licht zur Haupthärtung ist, sodass die integrierte Lichtmenge 10 mJ/cm² oder mehr beträgt.

5. Verfahren zur Herstellung der ZirkularpolarisationsTrennfolie gemäß Anspruch 1, wobei die Sequenz des Bestrahlungsschritts mit dem ausgewählten ultravioletten Licht (i) und des Schritts zur Einstellung der cholesterischen Ordnung (ii) ausgeführt wird, anschließend die Sequenz des Bestrahlungsschritts mit dem ultravioletten Licht (i) und der Schritt der Einstellung der cholesterischen Ordnung (ii) erneut ausgeführt werden, und anschließend der Überzugsschichthärtungsschritt (iii) ausgeführt wird.

6. Vorrichtung zur Überzugsschichtbildung, welche zur Verwendung im Verfahren zur Herstellung der Zirkularpolarisations-Trennfolie gemäß Anspruch 1 geeignet ist, umfassend:
eine Zufuhrvorrichtung (1), die zur kontinuierlichen Ausgabe des Substrats (2) angeordnet ist; und
einen Beschichtungskopf (4), der zur Bildung der Überzugsschicht für die Auftragung der photopolymerisierbaren Zusammensetzung auf das Substrat (2), das aus der Zufuhrvorrichtung (1) ausgegeben wird, angeordnet ist;
wobei die Vorrichtung darüber hinaus zwei oder mehr Serien der folgenden umfasst:
eine Einheit (6, 9), die zum Abkühlen des Substrats, auf welcher die Überzugsschicht gebildet worden ist, angeordnet ist, so dass die Überzugsschicht auf 20 bis 40°C gekühlt wird;
eine Vorrichtung (7) zur Bestrahlung mit ausgewähltem ultraviolettem Licht, die zur Bestrahlung der Überzugsschicht mit ausgewähltem ultraviolettem Licht mit einer Beleuchtungsstärke von 0,1 mW/cm² oder mehr und weniger als 10 mW/cm² und einer Temperatur von 20 bis 40°C für 0,1 bis 6 Sekunden in der Gegenwart von Sauerstoff angeordnet ist, wobei der Gradient des Polymerisationsgrads entlang der Dickenrichtung der Überzugsschicht auftritt; sowie
eine Einheit (8, 11), die zum Erwärmen des Substrats, auf welchem die Überzugsschicht gebildet worden ist, angeordnet ist,
wobei die Vorrichtung eine Vorrichtung zum Haupthärten mit ultraviolettem Licht (12) umfasst, die nach der Vorrichtung zur Bestrahlung mit ausgewähltem ultraviolettem Licht (7) angeordnet ist, angeordnet zur Bestrahlung der Überzugsschicht mit ultraviolettem Licht zur Haupthärtung, nachdem die Schicht mit der Vorrichtung zur Bestrahlung mit ausgewähltem ultraviolettem Licht (7) behandelt worden ist, zum Härten der Überzugsschicht, wobei die Vorrichtung zur Bestrahlung mit ultraviolettem Licht (7) so angeordnet ist, dass sie nicht eine Vorderseitenfläche der Überzugsschicht, sondern eine Seite des Substrats, und dadurch eine Rückseitenfläche der Überzugsschicht, die dem Substrat zugewandt ist, bestrahlt.

7. Vorrichtung zur Überzugsschichtbildung gemäß Anspruch 6, wobei sämtliche Kühleinheiten (6, 9) vor der Bestrahlungsvorrichtung zur Haupthärtung mit ultraviolettem Licht (12) angeordnet sind.

8. Vorrichtung zur Überzugsschichtbildung gemäß Anspruch 6, umfassend eine Stickstoffersetzungseinheit an einer Position, an welcher die Bestrahlung der Überzugsschicht auf dem Substrat (2) mit dem ultravioletten Licht zur Haupthärtung durch die Bestrahlungsvorrichtung zur Haupthärtung mit ultraviolettem Licht (12) ausgeführt wird.

9. Vorrichtung zur Überzugsschichtbildung gemäß Anspruch 6, des Weiteren umfassend eine Einheit, die so angeordnet ist, so dass sie eine Eigenschaft des Orientierens von Molekülen in der photopolymerisierbaren Zusammensetzung des von der Zufuhrvorrichtung (1)ausgegebenen Substrats (2) vor dem Auftragen der photopolymerisierbaren Zusammensetzung aus dem Beschichtungskopf (4) auf das Substrat (2) zur Oberfläche hin ausübt.

10. Vorrichtung zur Überzugsschichtbildung gemäß Anspruch 6, des Weiteren umfassend einen Trockner (5), der zum Erwärmen der Überzugsschicht, die aus dem Beschichtungskopf (4) auf das Substrat aufgetragen worden ist, vor dem Bestrahlen der Überzugsschicht mit ausgewähltem ultraviolettem Licht aus der Bestrahlungsvorrichtung mit ausgewähltem ultraviolettem Licht (7) angeordnet ist.

## Revendications

1. Procédé de production d'une feuille de séparation de polarisation circulaire comprenant :
une étape de formation de couche de revêtement consistant à appliquer sur un substrat une composition photopolymérisable contenant un initiateur de photopolymérisation et un composé polymérisable à cristaux liquides cholestériques, pour obtenir une couche de revêtement ; et
une étape de formation de couche de résine consistant à convertir ladite couche de revêtement en une couche de résine ayant une régularité cholestérique,
dans lequel ladite étape de formation de couche de résine inclut :
une étape d'irradiation de lumière ultraviolette sélectionnée (i) consistant à refroidir la couche de revêtement à 20 à 40 °C, puis à irradier ladite couche de revêtement avec une lumière ultraviolette sélectionnée ayant une intensité d'illumination de 0,1 mW/cm² ou plus et de moins de 10 mW/cm² à une température de 20 à 40 °C pendant 0,1 à 6 secondes en présence d'oxygène, un gradient du degré de polymérisation survenant dans la direction de l'épaisseur de la couche de revêtement, la lumière ultraviolette sélectionnée n'entraînant pas de durcissement complet ;
une étape d'ajustement de régularité cholestérique (ii) consistant à changer un cycle de la régularité cholestérique dans ladite couche de revêtement ; et
une étape de durcissement de couche de revêtement (iii) consistant à durcir ladite couche de revêtement, pour réaliser un durcissement complet de la couche de revêtement,
dans lequel ladite étape d'irradiation de lumière ultraviolette sélectionnée (i) et ladite étape d'ajustement de régularité cholestérique (ii) sont répétées plus d'une fois dans ladite étape de formation de couche de résine, et
dans lequel, dans ladite étape d'irradiation de lumière ultraviolette sélectionnée (i), une irradiation est donnée non pas sur une surface avant de la couche de revêtement mais sur une surface du substrat et ainsi sur une surface arrière de la couche de revêtement en regard du substrat.

2. Procédé de production de la feuille de séparation de polarisation circulaire selon la revendication 1, dans lequel une largeur d'une plage de longueurs d'onde de la lumière ultraviolette sélectionnée utilisée pour ladite étape d'irradiation de lumière ultraviolette sélectionnée (i) est en deçà de 100 nm.

3. Procédé de production de la feuille de séparation de polarisation circulaire selon la revendication 1, dans lequel la lumière ultraviolette sélectionnée utilisée pour ladite étape d'irradiation de lumière ultraviolette sélectionnée (i) a une intensité d'illumination maximale à une longueur d'onde de 300 nm ou plus et de moins de 400 nm.

4. Procédé de production de la feuille de séparation de polarisation circulaire selon la revendication 1, dans lequel ladite étape de durcissement de couche de revêtement (iii) est une étape de durcissement de la couche de revêtement par irradiation avec une lumière ultraviolette de durcissement principale pour qu'une quantité de lumière intégrée soit de 10 mJ/cm² ou plus.

5. Procédé de production de la feuille de séparation de polarisation circulaire selon la revendication 1, dans lequel ladite séquence de ladite étape d'irradiation de lumière ultraviolette sélectionnée (i) et de ladite étape d'ajustement de régularité cholestérique (ii) est réalisée, ensuite ladite séquence de ladite étape d'irradiation de lumière ultraviolette sélectionnée (i) et de ladite étape d'ajustement de régularité cholestérique (ii) est à nouveau réalisé, puis ladite étape de durcissement de couche de revêtement (iii) est réalisée.

6. Appareil de formation de couche de revêtement capable d'être utilisé pour le procédé de production de la feuille de séparation de polarisation circulaire selon la revendication 1, comprenant :
un dispositif d'alimentation (1) agencé pour diffuser en continu ledit substrat (2) ; et
une tête de revêtement (4) agencée pour appliquer ladite composition photopolymérisable sur le substrat (2) diffusé depuis ledit dispositif d'alimentation (1) pour former ladite couche de revêtement ;
dans lequel ledit appareil comprend également deux ou plus de deux séries de :
une unité (6, 9) agencée pour refroidir le substrat sur lequel ladite couche de revêtement a été formée de manière à refroidir ladite couche de revêtement à 20 à 40 °C ;
un dispositif d'irradiation de lumière ultraviolette sélectionnée (7) agencé pour irradier ladite couche de revêtement avec une lumière ultraviolette sélectionnée ayant une intensité d'illumination de 0,1 mW/cm² ou plus et de moins de 10 mW/cm² à une température de 20 à 40 °C pendant 0,1 à 6 secondes en présence d'oxygène, un gradient du degré de polymérisation se produisant dans la direction de l'épaisseur de ladite couche de revêtement ; et
une unité (8, 11) agencée pour chauffer le substrat sur lequel la couche de revêtement a été formée,
dans lequel ledit appareil comprend un dispositif d'irradiation de lumière ultraviolette de durcissement principale (12) disposé après ledit dispositif d'irradiation de lumière ultraviolette sélectionnée (7), agencé pour irradier ladite couche de revêtement avec une lumière ultraviolette de durcissement principale après que ladite couche est traitée par ledit dispositif d'irradiation de lumière ultraviolette sélectionnée (7), pour durcir la couche de revêtement, dans lequel ledit dispositif d'irradiation de lumière ultraviolette sélectionnée (7) est agencé pour irradier non pas une surface avant de la couche de revêtement mais une surface du substrat, et ainsi une surface arrière de la couche de revêtement en regard du substrat.

7. Appareil de formation de couche de revêtement selon la revendication 6, dans lequel toutes lesdites unités de refroidissement (6, 9) sont disposées avant ledit dispositif d'irradiation de lumière ultraviolette de durcissement principale (12).

8. Appareil de formation de couche de revêtement selon la revendication 6, comprenant une unité de substitution d'azote en une position où une irradiation de la couche de revêtement sur ledit substrat (2) avec la lumière ultraviolette de durcissement principale est réalisée par ledit dispositif d'irradiation de lumière ultraviolette de durcissement principale (12).

9. Appareil de formation de couche de revêtement selon la revendication 6, comprenant en outre une unité agencée pour donner une nature de molécules d'orientation dans ladite composition photopolymérisable à la surface du substrat (2) diffusé à partir dudit dispositif d'alimentation (1), avant application de ladite composition photopolymérisable depuis ladite tête de revêtement (4) sur ledit substrat (2).

10. Appareil de formation de couche de revêtement selon la revendication 6, comprenant en outre un sécheur (5) agencé pour chauffer la couche de revêtement appliquée depuis ladite tête de revêtement (4) sur ledit substrat, avant irradiation de la couche de revêtement avec la lumière ultraviolette sélectionnée à partir dudit dispositif d'irradiation de lumière ultraviolette sélectionnée (7).
